# EUROPÄISCHE PATENTSCHRIFT

(11) **EP 3 291 144 B1**
(45) Veröffentlichungstag und Bekanntmachung des Hinweises auf die Patenterteilung: **25.07.2018**
(21) Anmeldenummer: 16186185.1
(22) Anmeldetag: 29.08.2016
(51) Int. Cl.: G06K 17/00, G06K 7/10, G06K 19/07, G06K 19/077

(54) **RFID-VORRICHTUNG UND VERFAHREN ZUR FACHBELEGUNGSERKENNUNG**
RFID DEVICE AND METHOD FOR DETECTING COMPARTMENT OCCUPATION
DISPOSITIF RFID ET PROCEDE DE RECONNAISSANCE D'OCCUPATION DE CASIER

(43) Veröffentlichungstag der Anmeldung: 07.03.2018
(73) Patentinhaber: SICK AG, 79183 Waldkirch (DE)
(72) Erfinder: Pudenz, Florian, 22049 Hamburg (DE); Pilzner, Olaf, 22455 Hamburg (DE)

(56) Entgegenhaltungen:
- US-A1- 2004 113 787
- US-A1- 2011 063 113
- US-A1- 2012 306 624

## Beschreibung

Die Erfindung betrifft eine RFID-Vorrichtung und ein Verfahren zur Fachbelegungserkennung in einem Regal nach dem Oberbegriff von Anspruch 1 beziehungsweise 13.

RFID-Systeme dienen der automatischen Identifikation von Objekten. Dazu werden an den Objekten befestigte RFID-Transponder ausgelesen und gegebenenfalls Informationen in den Transponder zurückgeschrieben. Die erfassten Informationen werden verwendet, um den Aufenthaltsort, das Ziel oder sonstige Eigenschaften der Objekte zu erfassen und dadurch Lagerung und Fluss von Gütern und Produkten zu steuern. Es gibt verschiedene Typen von RFID-Transpondern, die sich beispielsweise in den verwendeten Frequenzen oder darin unterscheiden, ob sie aktiv mit eigener Energieversorgung oder passiv mit Sendeenergie des Lesesystems arbeiten. Ein Beispiel ist der etablierte Ultrahochfrequenzstandard (UHF) ISO 18000-6 für passive Transponder, die nach dem Backscatter-Verfahren ausgelesen werden.

Die mit Transpondern versehenen Objekte werden vor allem bei der Lagerung häufig geordnet gestapelt und in mehreren Ebenen oder Reihen angeordnet. Das typische Beispiel hierfür ist ein Regal mit Fächern oder Behälterreihen. Dabei befinden sich die Transponder insbesondere an Transportboxen der Intralogistik und sollen einem Regalfach zugeordnet werden, in das sie eingeführt werden. Es ist aber ein grundsätzliches Problem bei der Verwendung von Transpondern, dass der Ort eines Transponders nur mit viel Aufwand bestimmt werden kann. Deshalb ist zwar die Erkennung eines neuen Transponders im Feld auf verschiedene Weise möglich, jedoch die Zuordnung zu einem konkreten Regalfach mit RFID allein nicht oder nur sehr aufwändig möglich.

Eine besondere Anwendung für die automatische Erfassung der Regalbelegung ist die Produktionsprozesssteuerung, wo die Lagerhaltung durch Kenntnis der lokalen Bestände und des an der Entnahme gemessenen momentanen Bedarfs von Ausgangsmaterialien und Zwischenprodukten erheblich reduziert werden kann (Kanban-Prinzip). Ziel ist hierbei, die Zuführung von Material an die Produktionslinien möglichst verbrauchsorientiert zu steuern: Es darf nie zu wenig Material an der Linie sein, es soll aber möglichst auch nicht zu viel dort gelagert werden. Entsprechend wird eine sehr detaillierte Überwachung des Materials in den Kanban-Regalen angestrebt. Dazu werden sowohl angelieferte und eingeführte als auch entnommene, leere Transportboxen verfolgt.

Herkömmlich erfolgt diese Erfassung auf verschiedene Arten mit unterschiedlichem Automatisierungsgrad. Es gibt noch händische Materialsteuerung über Laufkarten, die von leeren Boxen entfernt und der Logistik in Papierform zurückgespielt werden. Etwas vereinfacht wird die Erfassung von zugeführten oder entnommenen Transportboxen durch das Lesen von Barcodes mit einem Handheld-Scanner. Auch der Einsatz von RFID-Transpondern ist aus der Praxis bekannt, jedoch werden dabei die in Transportboxen eingesteckten RFID-Transponder bei der Entnahme von Behältern separat gelesen. Die in den Barcodes oder RFID-Transpondern codierte Information kann konkrete Datensätze beispielsweise mit Materialart, Materialmenge oder Zielort umfassen, oder sie ist eine abstrakte Behälteridentifikation, die erst nach Abfrage und Verknüpfung in einer Datenbank solche konkreten Eigenschaften ergibt.

Es besteht der Wunsch nach intelligenteren Lösungen, in denen die Abläufe bei Beladung und Entnahme von Transportboxen mittels RFID-Technik automatisiert werden. Dazu soll konkret beispielsweise anhand spezifischer Transponder erkannt werden, dass und in welches Regalfach eine Transportbox in das System eingeführt wird, ob dies das richtige Regalfach ist, gegebenenfalls mit einer visuellen Rückmeldung an den Lagerarbeiter, und umgekehrt auch erkannt werden, ob und aus welchem Regalfach eine Transportbox entnommen wird. Dabei sollen auch zunächst nicht eindeutige Situationen etwa mit kurzzeitigen falschen Bewegungen berücksichtigt sein, wie dass eine Transportbox kurz in ein falsches Regalfach gehalten, erst entnommen, dann wieder eingeschoben wird oder ein Lagerarbeiter mit anderen Transportboxen am Regal entlang geht. Dabei soll auch noch eine flexible Aufteilung der Regalfächer für unterschiedliche Breiten von Transportboxen möglich sein.

Demnach stellt diese Anwendung hohe Anforderungen, die bisher nur unzureichend erfüllt werden. So lässt sich beispielsweise die Lokalisierung und Zuordnung durch eine große Anzahl von RFID-Antennen mit jeweils kleinem Lesefeld lösen. Der Verdrahtungsaufwand ist jedoch enorm, und es ist auch nicht sichergestellt, dass die Abfragezyklen für alle Antennen schnell genug sind, um alle notwendigen Bewegungen von Transportboxen zu erfassen.

Die noch unveröffentlichte deutsche Gebrauchsmusteranmeldung mit dem Aktenzeichen 202016103887 schlägt unter anderem vor, das Regal relativ großflächig mit RFID-Lesefeldern abzudecken, um die Transponder der Transportboxen zu erfassen. Gleichzeitig wird die Front des Regals mit einem Laserscanner überwacht, so dass neu erfasste Transponder einem Eingriff in das Überwachungsfeld des Laserscanners und damit einem Regalfach zugeordnet werden können. Das erfordert nicht nur den zusätzlichen Laserscanner, sondern einen hohen Einricht- und Justageaufwand, um die Überwachungsfelder in Laserscanner-Koordinaten den Regalfächern zuzuordnen. Andere denkbare Verfahren mit weniger Aufwand haben eine geringere Genauigkeit in der Zuordnung von Transportboxen zu Regalfächern.

Die EP 2 903 086 A1 offenbart eine RFID-Lesevorrichtung zur Regalbelegungserkennung. Dabei wird eine Vielzahl von Antennenleiterkarten in ein langgestrecktes Hohlprofil eingesetzt. Der technische Aufwand ist dabei vergleichsweise hoch, weil praktisch an jeder Lesestelle eine abstimmbare Antenne vorhanden ist. Somit wird zwar ein sehr geringer Installations- und Wartungsaufwand erzielt, dies aber bei hohen Herstellkosten für zahlreiche einzelne Antennen. Es wird dabei auch vorgeschlagen, zusätzliche Lichtschranken anzubringen, um zu erkennen, ob sich an einer jeweiligen Position ein Behälter befindet. Eine solche Lokalisierung vollständig durch Zusatzsensorik ist zwar denkbar, erfordert aber kostenintensive Lösungen wie beispielsweise zahlreiche Lichtschranken, um tatsächlich jede Position im Regal zu unterscheiden. Ein alternativer Ansatz ist, die Antenne selbst als Sensor zur Anwesenheitserkennung zu nutzen. Dazu sind aber kostenintensive segmentierbare Antennen mit eng begrenzten Lesefeldern samt aufwändiger intelligenter Auswertung erforderlich.

In der US2012/0306624 A1 wird ein System zur Bestätigung einer Position eines Produkts in einem Regal mittels RFID beschrieben. Dabei sind je Regalfach ein RFID-Leser und ein Positions-Transponder vorgesehen, und die Regalbelegung wird daran erkannt, ob der RFID-Leser den zugehörigen Positions-Transponder lesen kann.

Die US 2004/0113787 A1 befasst sich mit einer Vorrichtung, die mittels RFID-Transponder die Position eines Objekts bestimmt. Dazu wird ein ganzes Feld von RFID-Tags aufgebaut, und anhand einer Maske und des Musters der dadurch nicht mehr lesbaren RFID-Transponder wird ein Objekt lokalisiert.

Aus der US 2011/0063113 A1 ist ein System zum Überwachen von Objekten bekannt, welche RFID-Transponder tragen. In dem Überwachungsbereich wird in drei Dimensionen verteilt eine Vielzahl von Positions-RFID-Transpondern platziert. Dann werden RF-Signaturen der Positions-RFID-Transponder bestimmt, die sich beispielsweise durch Hinzufügen oder Entfernen von Objekten in einem Regal verändern, woran die Regalbelegung erkannt wird.

Es ist daher Aufgabe der Erfindung, die Fachbelegungserkennung in einem Regal mittels RFID zu verbessern.

Diese Aufgabe wird durch eine RFID-Vorrichtung und ein Verfahren zur Fachbelegungserkennung in einem Regal nach Anspruch 1 beziehungsweise 13 gelöst. Die RFID-Vorrichtung liest RFID-Transponder auf dem Regal und erkennt daher, wenn sich an der RFID-Transponder-Population etwas ändert, also RFID-Transponder hinzukommen oder entnommen werden. Die Erfindung geht nun von dem Grundgedanken aus, solche RFID-Transponder indirekt mit Hilfe von einer Vielzahl von mindestens zwei Referenztranspondern in bekannten Positionen zu lokalisieren. Dazu werden bei einer Veränderung der RFID-Transponder-Population Kommunikationseigenschaften der RFID-Kommunikation mit den Referenztranspondern bestimmt. Der entnommene oder hinzugefügte RFID-Transponder wird dort lokalisiert, wo sich ein Referenztransponder mit veränderten Kommunikationseigenschaften befindet. Denn die veränderten Kommunikationseigenschaften werden darauf zurückgeführt, dass ein Objekt in den Signalweg zu diesem Referenztransponder eingetreten ist oder daraus entfernt wurde. Ein besonders illustrativer Spezialfall ist, dass das RFID-Signal eines Referenztransponders von dem Objekt gänzlich abgeschirmt wird. Die Lokalisierung des die RFID-Transponder-Population verändernden Ereignisses erfolgt dann über das Verschwinden eines bekannten Referenztransponders, allgemeiner über Veränderungen an einem bekannten Referenztransponder.

Unter Kommunikationseigenschaften werden Parameter der RFID-Kommunikation verstanden, die aus dem RFID-Signal und insbesondere der Trägerwelle selbst abgeleitet werden. Es sind also keine gemäß dem RFID-Protokoll aus einem Referenztransponder ausgelesenen Daten, die auch keine verwertbare Information über die momentane Position anderer RFID-Transponder enthalten würden.

Die erfassbare RFID-Transponder-Population, deren Veränderung eine Lokalisierung auslöst, kann durch Filter beschränkt werden und beispielsweise nur RFID-Transponder von Transportboxen erfassen oder Referenztransponder ausschließen. Eine Veränderung in der Population der Referenztransponder ist zwar auch nützlich zu erkennen, beispielsweise um einen defekten oder entfernten Referenztransponder ersetzen zu können, aber das ist ein anderes Problem. Referenztransponder sollen im Betrieb nicht lokalisiert werden, sondern bilden mit ihren bekannten Positionen das Bezugssystem.

Die Erfindung hat den Vorteil, dass eine eindeutige Zuordnung von Objekten, insbesondere Transportboxen, zu einer Position in einem Regal oder einem Regalfach unter alleiniger Verwendung von RFID möglich wird. Das Regal kann relativ großflächig mit RFID-Lesefeldern bestrahlt werden, dadurch eine Eingrenzung in viele, sehr kleine Lesefelder, die einzeln anzusteuern wären. Dementsprechend ist der Einricht- und Verdrahtungsaufwand gering. Die für die Lokalisierung benötigten Bauteile, nämlich die Referenztransponder, sind ausgesprochen kostengünstig und durch Anpassung von Anzahl und Anordnung auch sehr flexibel nutzbar. Die Referenztransponder können mit geeigneten regalbezogenen Identifikationen programmiert werden, beispielsweise Regalnummer, Regalebenennummer oder Fachnummer, und so eine Verwaltung der Regalfächer vereinfachen.

Vorzugsweise erfolgt die Zuordnung zum Zeitpunkt des Einlagerns von Transportboxen. Ein Kanban-Regal ist üblicherweise so ausgestaltet, dass Transportboxen von hinten eingestellt werden und dann auf abschüssigen Regalböden nach vorne nachrücken. Deshalb hat eine Lokalisierung beim Einlagern den Vorteil, dass nach der Lokalisierung der Einstellbereich und damit der Signalweg zu den Referenztranspondern wieder frei wird.

Die Kommunikationseigenschaften weisen bevorzugt einen Pegel und/oder eine Phase des RFID-Signals auf. Der Pegel, beispielsweise der RSSI (Received Signal Strength Indicator), hängt zwar hauptsächlich vom gegebenen Abstand zwischen der RFID-Vorrichtung und dem Referenztransponder sowie der relativen Orientierung, aber auch stark davon ab, welche Materialien das RFID-Signal zu durchdringen hat. Es ergibt sich also ein deutlicher Unterschied je nachdem, ob sich ein Objekt wie eine Transportbox zwischen Antenne und Referenztransponder befindet. Die Phase beziehungsweise der Phasenwinkel der RFID-Antwort in Bezug auf das RFID-Sendesignal verändert sich ebenfalls durch die auf dem Signalweg befindlichen Objekte. Beide Parameter Pegel und Phase können einzeln oder in Kombination verwendet werden.

Die Steuer- und Auswertungseinheit ist bevorzugt dafür ausgebildet, die Referenztransponder und deren Positionen einzulernen. Das geschieht vor dem eigentlichen Betrieb oder auch einer Neubelegung des Regals. Auf den Referenztranspondern ist deren Positionsinformation gespeichert, etwa in Form einer regalbezogenen Identifikation wie der Fachnummer. Es genügt dann eine übliche Erfassung aller lesbaren RFID-Transponder (Inventory) und anschließende Abfrage der jeweiligen regalbezogenen Identifikation. Vorzugsweise ist auf den Referenztranspondern auch eine Information gespeichert, dass es sich um Referenztransponder handelt. Dann kann bei der Abfrage ein entsprechendes Filter gesetzt werden, und es antworten nur Referenztransponder. Das Regal muss dann für das Einlernen nicht einmal von Objekten mit sonstigen RFID-Transpondern geräumt werden.

Die Steuer- und Auswertungseinheit ist bevorzugt dafür ausgebildet, Kommunikationseigenschaften der Referenztransponder als Bezug für Veränderungen zu speichern. Die Kommunikationseigenschaften ändern sich mit der Regalbelegung und können auch durch äußere Faktoren verändert werden, wie neben dem Regal befindlichen Objekten. Daher werden sie vorzugsweise nicht nur einmal anfänglich, sondern beispielsweise zyklisch neu erfasst und als Bezug gespeichert. Eine weitere Möglichkeit ist, jeweils die Kommunikationseigenschaften als Bezug zu speichern, die bei einer Lokalisierung während einer Veränderung der RFID-Transponder-Population erfasst werden.

Die Steuer- und Auswertungseinheit ist bevorzugt dafür ausgebildet, eine Liste der erfassbaren RFID-Transponder-Population zu führen. Die RFID-Vorrichtung verwaltet also eine Liste sämtlicher lesbarer RFID-Transponder, die zyklisch oder ereignisbasiert aktuell gehalten wird. Dadurch können Veränderungen festgestellt werden, die eine Lokalisierung auslösen.

Die Steuer- und Auswertungseinheit ist bevorzugt dafür ausgebildet, den entnommenen oder hinzugekommenen RFID-Transponder anhand der Position desjenigen Referenztransponders zu lokalisieren, dessen Kommunikationseigenschaften sich am meisten verändert haben. Es ist denkbar, dass beim Einstellen oder Entnehmen eines Objekts die Kommunikation zu mehreren Referenztranspondern ändert, wobei dann die größte Änderung als maßgeblich angenommen wird. Möglicherweise gibt es große Veränderungen bei benachbarten Referenztranspondern, dann wird vorzugsweise der zu lokalisierende RFID-Transponder als zwischen diesen Referenztranspondern befindlich angenommen, gegebenenfalls mit einer Gewichtung anhand der Veränderungen. Geringfügige Änderungen im Kommunikationsverhalten von Referenztranspondern können durch eine Art Rauschschwelle ignoriert werden.

Die Referenztransponder sind vorzugsweise in bekannten, insbesondere regelmäßigen Abständen längs einer Regalebene angebracht. Sie bilden so ein ausreichend dichtes Gitter, um RFID-Transponder mit einer gewünschten Ortsauflösung zu lokalisieren. Vorzugsweise ist eine solche Reihe von Referenztranspondern in allen Regalböden beziehungsweise-ebenen vorhanden, wobei die Abstände variieren können.

Bevorzugt ist jeweils ein Referenztransponder je Regalfach angebracht. Das gibt dann einen klaren Bezug zu der konkreten Fachaufteilung. Es kann sich auch um eine fiktive feinste Fachaufteilung handeln, mit der Möglichkeit, im Betrieb mehrere solche Fächer zu einem Fach zusammenzufassen. Dadurch bleibt die Flexibilität erhalten, das Regal nach den jeweiligen Anforderungen vor Ort auch mit Transportboxen oder Objekten unterschiedlicher Größen zu belegen.

Vorteilhafterweise sind Referenztransponder oberhalb der Regalfächer angeordnet. Nochmals bevorzugt sind solche Referenztransponder von unten her frei zugänglich und können ohne Dämpfung des RFID-Signals nach unten kommunizieren, wo häufig die Antenne angebracht ist. Das Regalfach wird dann unten und oben von Antenne beziehungsweise Referenztransponder eingerahmt.

Vorteilhafterweise sind Referenztransponder unten im Regalboden angeordnet. Sie sind frei von oben her zugänglich oder durch ein nichtleitendes Material bedeckt. Das kann einfach die Umkehrung der Anordnung des vorigen Absatzes bilden. Es ist aber auch denkbar, dass sowohl Antenne als auch Referenztransponder unten im Regalboden angeordnet sind. Die Kommunikationseigenschaften ändern sich dann, weil ein auf den Regalboden eingestelltes Objekt die Transponderantenne verstimmt. Das kann durch gezielte Materialwahl des Bodens der Transportboxen noch unterstützt werden. Mischformen mit einem Teil der Referenztransponder oben und einem Teil unten sind denkbar. In einem Regal, das die Regalfächer physisch durch Seiten- oder Rückwände abtrennt, können sich auch Referenztransponder in diesen Wänden befinden.

Bei den Referenztranspondern sind bewegliche Abschirmelemente angeordnet, die ihre Position bezüglich des jeweiligen Referenztransponders durch Einstellen oder Entnahme eines Objekts verändern. Die Abschirmelemente schieben dabei sich insbesondere vor die Referenztransponder oder geben sie frei und sorgen so für eine Veränderung der Kommunikationseigenschaften. Es sind leitende und den Referenztransponder vollständig bedeckende Abschirmelemente denkbar, so dass der jeweilige Referenztransponder für die RFID-Vorrichtung vollständig verschwindet und wieder auftaucht, aber auch ein dielektrisches Material, das den Pegel oder eine andere Eigenschaft des RFID-Signals verändert.

Alternativ zu beweglichen Abschirmelementen sind die Referenztransponder beweglich an dem Regal angeordnet und verändern ihre Position durch Einstellen oder Entnahme eines Objekts. Durch die veränderte Relativlage zu der Antenne verändern sich die Kommunikationseigenschaften. Vorzugsweise wird dabei die Polarisationsrichtung der Referenztransponder in eine zu der Antenne der RFID-Vorrichtung passende Lage beziehungsweise aus dieser Lage heraus gedreht.

Die Antenne ist bevorzugt eine über die Regalbreite oder Regalhöhe langgestreckte Antenne, beispielsweise eine Stabantenne. Die Antenne kann auch aus mehreren in Reihe geschalteten Antennen zusammengesetzt sein. Es genügt ein relativ einfaches Antennenkonzept mit Feldabstrahlung über die gesamte Länge der Antenne, da die Antenne nicht für die Lokalisierung genutzt wird, obwohl das ergänzend vorstellbar ist.

Die Antenne ist bevorzugt parallel zu Regalelementen angeordnet oder als Regalelement genutzt. Je nach Ausführungsform ist die Antenne selbst Teil des Regals, dient zu dessen Stabilisierung oder ist zumindest so in das Regal eingebaut, dass es anders als eine herkömmliche Verkabelung keine Abläufe stört. Die Antenne kann waagerecht oder senkrecht montiert und über die gesamte Länge einer Regalebene oder die Höhe eines Regals sämtliche RFID-Transponder in der Nähe erfassen. Vorzugsweise sind weitere parallel angeordnete Antennen vorgesehen, um das gesamte Regal abzudecken.

Die RFID-Vorrichtung weist vorzugsweise mindestens ein an dem Regal anzubringendes Anzeigeelement auf. Nochmals bevorzugt handelt es sich um je ein Anzeigeelement pro Fach. So kann durch einfache Signalisierung wie rot/grün das Ergebnis einer Plausibilitätsprüfung der eingestellten Transportbox in dem dafür gewählten Regalfach angezeigt werden. Insbesondere können die Referenztransponder mit einer LED kombiniert werden und dienen so auch als Anzeigeelement, wobei die LED durch RFID-Kommunikation gesteuert werden kann. Es sind aber auch komplexere Anzeigen denkbar, etwa die Darstellung des Regals auf einem Bildschirm mit Markierung von Regalfächern, Transportboxen, Transpondern und dergleichen. Weitere Anwendungsbeispiele für eine Anzeige sind Fehlermeldungen, Anzeigen des Belegungszustands, Anwesenheitsanzeige einer Transportbox, Anzeigen zu entnehmender oder nachzufüllender Objekte, oder die Anzeige der aus dem Transponder ausgelesenen Information. Für die Anzeige der meisten dieser Informationen genügen einfache Blink- oder Farbcodes von LEDs.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Übersichtsdarstellung eines Regals mit einer erfindungsgemäßen RFID-Vorrichtung;
- Fig. 2: eine Seitenansicht des Regals zur Darstellung der Lesefelder und Erläuterung möglicher Positionen von Referenztranspondern;
- Fig. 3: eine Seitenansicht ähnlich Figur 2 mit alternativen Positionen von Referenztranspondern;
- Fig. 4: eine Darstellung ähnlich Figur 2 eines Regals mit alternativen Lesefeldern der jeweiligen Antenne und nochmal variierten Positionen von Referenztranspondern; und
- Fig.5: ein Ausschnitt einer Seitenansicht des Regals in einer weiteren Ausführungsform mit beweglichen Elementen vor den Referenztranspondern.

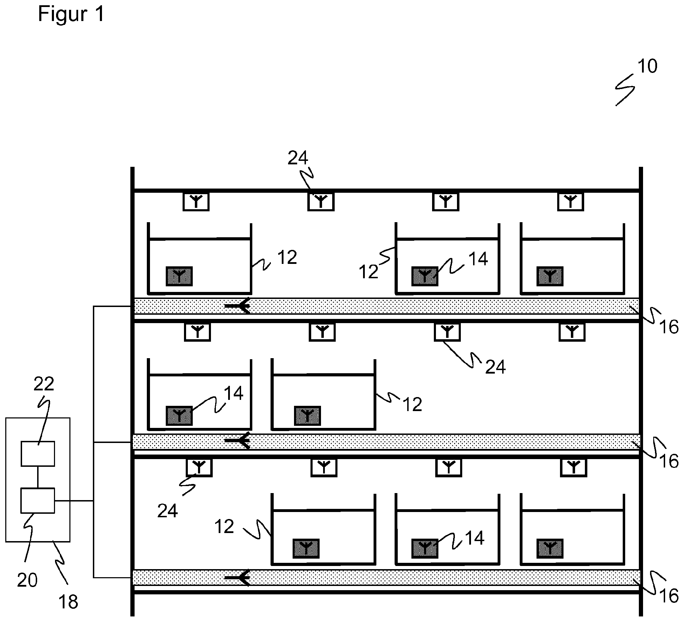

Figur 1 zeigt eine Übersichtsdarstellung eines Regals 10 mit einer Vielzahl von Behältern 12, insbesondere Transportboxen oder Kanban-Behälter. In den Behältern 12 werden nicht dargestellte Objekte gelagert. In anderen Ausführungsformen können Fächer durch das Regal 10 selbst abgetrennt beziehungsweise Objekte ohne Behälter 12 gelagert sein. Die Behälter 12 und/oder die darin befindlichen Objekte sind mit Transpondern 14 versehen, wobei zur sprachlichen Vereinfachung im Folgenden davon ausgegangen wird, dass jeweils ein Behälter 12 den Transponder 14 trägt.

An dem Regal 10 sind mehrere langgestreckte Antennen 16 angebracht. Diese Antennen 16 sind Teil einer RFID-Vorrichtung 18, die in Figur 1 als abgesetzter Block dargestellt ist. Alternativ ist aber möglich, die RFID-Vorrichtung 18 zumindest teilweise oder auch vollständig in das Regal 10 zu integrieren. Die RFID-Vorrichtung 18 weist einen RF-Transceiver 20, der an die Antennen 16 angeschlossen ist, und eine Steuer- und Auswerteeinheit 22 auf.

Weiterhin sind an dem Regal 10 mehrere Referenztransponder 24 angebracht. Die Referenztransponder 24 sind zur Unterscheidung hell, die Transponder 14 dagegen dunkel dargestellt. In Figur 1 ist jeweils ein Referenztransponder 24 über jedem Regalfach dargestellt. Dies kann in anderen Ausführungsformen variiert werden, und Referenztransponder 24 können mit kleineren oder größeren Abständen, mit Lücken oder sogar unregelmäßig angeordnet sein.

Die RFID-Vorrichtung 18 liest die Transponder 14 und die Referenztransponder 24 in an sich bekannter Weise aus. Dazu sind die Funktionen eines üblichen RFID-Verfahrens beispielsweise gemäß ISO 18000-6 in der Steuer- und Auswerteeinheit 22 implementiert, und es werden über den RF-Transceiver 20 und die Antennen 16 die für eine Kommunikation mit den Transpondern 14 und den Referenztranspondern 24 erforderlichen RFID-Signale ausgetauscht.

Mit diesem Aufbau ist es möglich, einen in das Regal eingestellten Behälter 12 daran zu erkennen, dass dessen Transponder 14 neu im Lesefeld auftaucht, und diesen Behälter 12 zugleich anhand der Veränderung der Kommunikationseigenschaften mit den Referenztranspondern 24 zu lokalisieren. Analog wird ein entnommener Behälter 12 erkannt und lokalisiert, wenn ein Transponder 14 aus dem Lesefeld verschwindet.

Dazu kennt die Steuer- und Auswertungseinheit 22 die Positionen der Referenztransponder 24, insbesondere welchem Regalfach ein Referenztransponder 24 zugeordnet ist. Diese Informationen können in einem Einlernprozess gewonnen werden, in dem die RFID-Vorrichtung 18 alle Transponder 14, 24 in ihrer Umgebung daraufhin abfragt, ob es sich um einen Referenztransponder 24 handelt und falls ja, welche Position darauf gespeichert ist. Alternativ werden diese Informationen parametriert oder von einem übergeordneten System vorgegeben, so dass nicht zwingend die eigene Position auf einem Referenztransponder gespeichert sein muss. Die Steuer- und Auswertungseinheit 22 erfasst und speichert weiterhin als Vergleichsdatensatz Kommunikationseigenschaften der RFID-Kommunikation mit den Referenztranspondern 24, insbesondere den Pegel (RSSI) und/oder den Phasenwinkel. Das geschieht vorzugsweise zyklisch oder ereignisbasiert, etwa jeweils nach einer Lokalisierung.

Die eigentliche Lokalisierung wird durch das Hinzufügen oder Entnehmen eines Behälters 12 mit einem Transponder 14 ausgelöst. Die Steuer- und Auswertungseinheit 22 verwaltet eine Liste der jeweils aktuell erreichbaren RFID-Transponder-Population, d.h. der in ihrem Lesefeld vorhandenen Transpondern 14 (Inventory) und erkennt so, wenn ein Transponder 14 und folglich der damit gekennzeichnete Behälter 12 entfernt oder hinzugefügt wird. Bei einer derartigen Veränderung der erfassbaren RFID-Transponder-Population werden erneut die Kommunikationseigenschaften der RFID-Kommunikation mit den Referenztranspondern 24 aufgenommen und mit dem Vergleichsdatensatz verglichen.

Durch das Einführen oder Entnehmen des betreffenden Behälters 12 in das Regal 10 wird das Lesefeld im Umfeld des Behälters 12 zumindest leicht verändert. Dies wirkt sich in entsprechenden Veränderungen in der Kommunikation mit den Referenztranspondern 24 aus. Die Steuer- und Auswertungseinheit 22 bestimmt nun durch den Vergleich, zu welchem Referenztransponder 24 die Kommunikation abweicht. Daraus wird eine Zuordnung des Behälters 12 zu einem konkreten Referenztransponder 24 und dem zugehörigen konkreten Regalfach hergeleitet. Falls sich die Kommunikationseigenschaften bei mehreren Referenztranspondern 24 ändern, kann eine Auswahl beispielsweise durch die größte Veränderung erfolgen. Im Extremfall, etwa bei einem metallischen Behälter 12, der den Signalweg völlig blockiert, ist ein Referenztransponder 24 für die RFID-Vorrichtung gänzlich verschwunden.

So wird mit Hilfe der Referenztransponder 24 die Zuordnung von Objekten und Behältern 12 zu einem jeweiligen Fach beziehungsweise einer Position in dem Regal 10 bestimmt. Die RFID-Vorrichtung 18 oder ein übergeordnetes System (Warehouse Management, ERP), an das die RFID-Vorrichtung 18 angeschlossen ist, kennt auf diese Weise die jeweils aktuelle Belegung des Regals 10 mit Behältern 12 und Objekten.

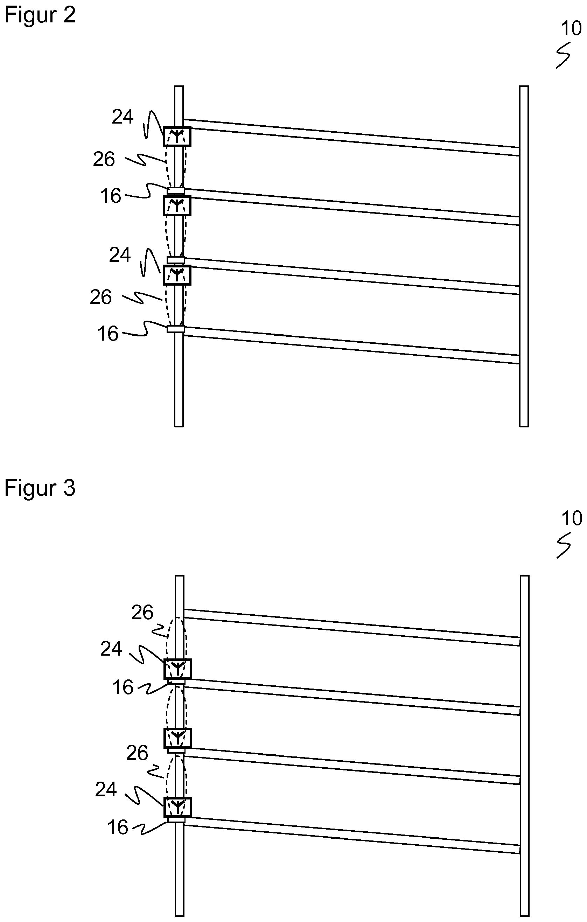

Figur 2 zeigt eine Seitenansicht eines Regals 10, das beispielhaft als Kanban-Regal ausgebildet ist. Es wird von einer Seite befüllt, in der Darstellung der linken Seite, und auf der anderen Seite werden Behälter 12 beziehungsweise allgemein Objekte entnommen. Die Schrägstellung der Regalebenen bewirkt, dass die Behälter 12 zur Entnahmeseite nachrutschen. Die RFID-Vorrichtung 18 ist hier auf der Seite montiert, auf der das Regal 10 befüllt wird. Dementsprechend finden die RFID-Identifizierung, die Lokalisierung von Objekten und Behältern 12 sowie die Zuordnung während des Befüllens statt.

Die Positionierung der RFID-Vorrichtung 18 auf der Einfüllseite führt dazu, dass Transponder 14 der eingestellten Behälter 12 aus Sicht der RFID-Vorrichtung 18 neu auftauchen, woraufhin dann wie beschrieben das betroffene Regalfach bestimmt wird. Es ergibt sich eine weitere Möglichkeit zur Lokalisierung, wenn der Behälter 12 zur rechten Seite nachrutscht und der Transponder 14 dabei wieder aus dem Lesefeld der RFID-Vorrichtung 18 verschwindet. Deshalb ist denkbar, jeden Behälter 12 beim Einstellen, beim Nachrutschen oder doppelt zu lokalisieren und die Ergebnisse zu plausibilisieren oder zu kombinieren.

Die Referenztransponder 24 sind in dieser Ausführungsform jeweils oben an den Regalfächern gegenüber den unten angeordneten Antennen 16 angebracht. Eingestellte Behälter 12 unterbrechen also den direkten Signalweg und führen deshalb zu großen Veränderungen der Kommunikationseigenschaften. Außerdem sind in der dargestellten Ausführungsform die Antennenkeulen 26 vorzugsweise nur nach oben gerichtet. Das kann durch Antennen 16 erreicht werden, die ein sehr eng begrenztes Lesefeld ermöglichen (Nahfeldantennen) oder die eine sehr gute Richtwirkung (Directivity) mit hohem Front-to-Back Ratio aufweisen. Dadurch werden RFID-Transponder 14 je Antenne 16 nur in einer dedizierten Regalebene erfasst. Deshalb kann eine RFID-Lesung eines Transponders 14 durch eine bestimmte Antenne 16 sehr einfach einer Regalebene zugeordnet werden, und diese Information kann zusätzlich zur Lokalisierung beziehungsweise Bestimmung eines Regalfachs genutzt werden.

Es ist denkbar, die RFID-Vorrichtung 18 alternativ oder zusätzlich an der anderen Seite des Regals 10 zu montieren, um in analoger Weise Entnahmen zu erkennen, zu lokalisieren und zu identifizieren.

Figur 3 zeigt eine Seitenansicht eines Regals 10. In dieser abgewandelten Ausführungsform der RFID-Vorrichtung 18 sind jedoch die Referenztransponder 24 nicht oben und gegenüber den unten angeordneten Antennen 16 angebracht, sondern ebenfalls unten. Insbesondere werden die Referenztransponder 24 in den Boden des jeweiligen Regalfachs integriert und dabei so positioniert, dass der Boden eines eingeschobenen Behälters 12 sie nahezu berührt. Die Veränderung der Kommunikationseigenschaften erfolgt in diesem Fall durch eine Verstimmung der Transponderantenne durch das Material des Behälters 12. Dieser Effekt kann durch geeignete Materialwahl für den Boden des Behälters 12 optimiert werden.

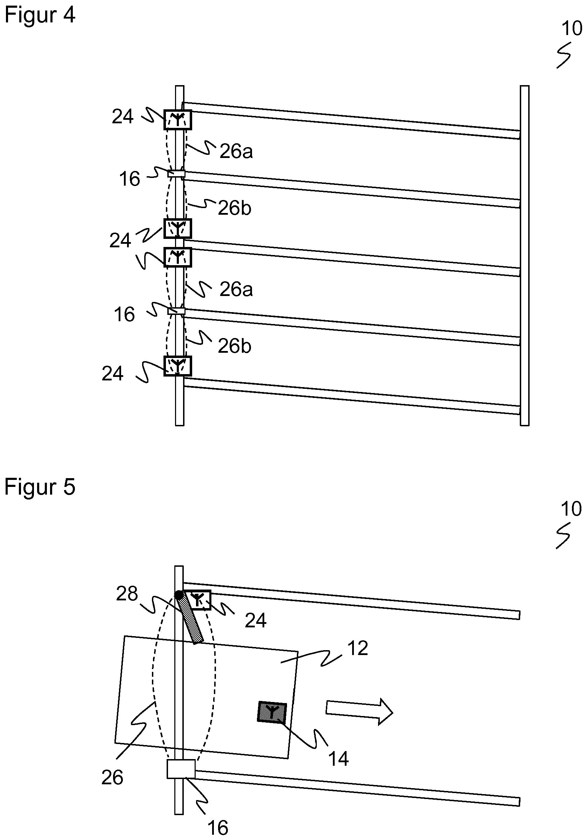

Figur 4 zeigt eine Seitenansicht eines Regals 10 mit einer weiteren Ausführungsform der RFID-Vorrichtung 18. Hier sind die Referenztransponder 24 über die Regalebenen alternierend oben und unten angebracht. Zudem sind vorteilhafterweise die Antennen 16 modifiziert, weisen nämlich nun Antennenkeulen 26a-b auf, die RFID-Transponder 14 und Referenztransponder 24 sowohl in der oberhalb als auch der unterhalb gelegenen Regalebene erfassen. Es sind dadurch prinzipiell halb so viele Antennen 16 nur für jede zweite Regalebene ausreichend.

Figur 5 zeigt einen vergrößerten Ausschnitt einer Seitenansicht eines Regals 10 mit einer weiteren Ausführungsform der RFID-Vorrichtung 18. Dabei ist ein mechanisches Abschirmelement 28 bei den Referenztranspondern 24 vorgesehen, so dass beim Einschieben des Behälters 12 der Referenztransponder 24 vollständig oder teilweise verdeckt wird. Das Abschirmelement 28 ist vorzugsweise leitend, um einen größeren Effekt zu erzielen. Die dargestellte Ausführung als schwenkbar gelagertes Blechstück oder biegsames Stück Federstahl, das beim Einschieben des Behälters 12 teilweise oder vollständig vor den Referenztransponder 24 klappt, ist nur ein Beispiel. Jedenfalls werden durch das Abschirmelement 28 die Kommunikationseigenschaften messbar beeinflusst, wodurch die Wirkung des Behälters 12 selbst verstärkt oder ersetzt wird.

In einer anderen Ausführungsform werden die Referenztransponder 24 selbst durch das Einführen oder Entfernen eines Behälters 12 bewegt. Beispielsweise ist der Referenztransponder 24 dreh- oder schwenkbar gelagert, und der eingeführte oder entnommene Behälter 12 dreht die Polarisationsrichtung des Referenztransponders 24. Das erzeugt eine signifikante Änderung der Kommunikationseigenschaften, die für die Zuordnung des Ereignisses zu dem Referenztransponder 24 und damit einem Regalfach genutzt werden kann.

Allen Ausführungsformen ist gemeinsam, dass sie den Ort eines neu erkannten Transponders 14 an einem Behälter 12 bestimmen, indem die RFID-Vorrichtung 18 einen Referenztransponder 24 an bekannter Position anders erkennt, nicht mehr erkennt oder erneut erkennen kann, was sich in einer Änderung der Kommunikationseigenschaften bemerkbar macht.

## Patentansprüche

1. RFID-Vorrichtung (18) zur Fachbelegungserkennung in einem Regal (10) mit mindestens einer Antenne (16), einem an die Antenne (16) angeschlossenen RF-Transceiver (20) und einer Steuer- und Auswertungseinheit (22) zur Kommunikation mit einem RFID-Transponder (14) über den RF-Transceiver (22) und die Antenne (16) mittels eines RFID-Signals und zur Erkennung und örtlichen Zuordnung von Veränderungen der Fachbelegung, wobei die RFID-Vorrichtung (18) eine Vielzahl von in bekannter Position am Regal (10) anzubringenden Referenztranspondern (24) aufweist und die Steuer- und Auswertungseinheit (22) dafür ausgebildet ist, bei einer Veränderung der erfassbaren RFID-Transponder-Population den entnommenen oder hinzugekommenen RFID-Transponder (14) anhand der Position eines Referenztransponders (24) zu lokalisieren, bei dem sich mit der Veränderung der erfassbaren RFID-Transponder-Population Kommunikationseigenschaften der RFID-Kommunikation verändert haben
**dadurch gekennzeichnet,**
**dass** die Referenztransponder (24) beweglich an dem Regal (10) angeordnet sind und ihre Position durch Einstellen oder Entnahme eines Objekts (12) verändern oder bei den Referenztranspondern (24) bewegliche Abschirmelemente (28) angeordnet sind, die ihre Position bezüglich des jeweiligen Referenztransponders (24) durch Einstellen oder Entnahme eines Objekts (12) verändern.

2. RFID-Vorrichtung (18) nach Anspruch 1,
wobei die Kommunikationseigenschaften einen Pegel und/oder eine Phase des RFID-Signals aufweisen.

3. RFID-Vorrichtung (18) nach Anspruch 1 oder 2,
wobei die Steuer- und Auswertungseinheit (22) dafür ausgebildet ist, die Referenztransponder (24) und deren Positionen einzulernen.

4. RFID-Vorrichtung (18) nach einem der vorhergehenden Ansprüche,
wobei die Steuer- und Auswertungseinheit (22) dafür ausgebildet ist, Kommunikationseigenschaften der Referenztransponder (24) als Bezug für Veränderungen zu speichern.

5. RFID-Vorrichtung (18) nach einem der vorhergehenden Ansprüche,
wobei die Steuer- und Auswertungseinheit (22) dafür ausgebildet ist, eine Liste der erfassbaren RFID-Transponder-Population zu führen.

6. RFID-Vorrichtung (18) nach einem der vorhergehenden Ansprüche,
wobei die Steuer- und Auswertungseinheit (22) dafür ausgebildet ist, den entnommenen oder hinzugekommenen RFID-Transponder (14) anhand der Position desjenigen Referenztransponders (24) zu lokalisieren, dessen Kommunikationseigenschaften sich am meisten verändert haben.

7. RFID-Vorrichtung (18) nach einem der vorhergehenden Ansprüche,
wobei die Referenztransponder (24) in bekannten, insbesondere regelmäßigen Abständen längs einer Regalebene angebracht sind.

8. RFID-Vorrichtung (18) nach einem der vorhergehenden Ansprüche,
wobei jeweils ein Referenztransponder (24) je Regalfach angebracht ist.

9. RFID-Vorrichtung (18) nach einem der vorhergehenden Ansprüche,
wobei Referenztransponder (24) oberhalb der Regalfächer angeordnet sind.

10. RFID-Vorrichtung (18) nach einem der vorhergehenden Ansprüche,
wobei Referenztransponder (24) unten im Regalboden angeordnet sind.

11. RFID-Vorrichtung (18) nach einem der vorhergehenden Ansprüche,
wobei die Antenne (16) eine über die Regalbreite oder Regalhöhe langgestreckte Antenne und/oder parallel zu Regalelementen angeordnet oder als Regalelement genutzt ist.

12. RFID-Vorrichtung (18) nach einem der vorhergehenden Ansprüche,
die mindestens ein an dem Regal (10) anzubringendes Anzeigeelement aufweist.

13. Verfahren zur Fachbelegungserkennung in einem Regal (10), bei dem über mindestens eine Antenne (16) mittels RFID-Signalen mit RFID-Transpondern (14) in dem Regal (10) kommuniziert und eine Veränderung der Fachbelegung erkannt und örtlich zugeordnet wird, wobei an dem Regal (10) eine Vielzahl von Referenztranspondern (24) in bekannten Positionen angebracht wird und bei einer Veränderung der erfassbaren RFID-Transponder-Population der entnommene oder hinzugekommene RFID-Transponder (14) anhand der Position eines Referenztransponders (24) lokalisiert wird, bei dem sich mit der Veränderung der erfassbaren RFID-Transponder-Population Kommunikationseigenschaften der RFID-Kommunikation verändert haben
**dadurch gekennzeichnet,**
**dass** die Referenztransponder (24) beweglich an dem Regal (10) angeordnet sind und ihre Position durch Einstellen oder Entnahme eines Objekts (12) verändern oder bei den Referenztranspondern (24) bewegliche Abschirmelemente (28) angeordnet sind, die ihre Position bezüglich des jeweiligen Referenztransponders (24) durch Einstellen oder Entnahme eines Objekts (12) verändern.

## Claims

1. An RFID apparatus (18) for compartment occupancy detection in a shelf (10), the RFID apparatus (18) comprising at least one antenna (16), an RF transceiver (20) connected to the antenna (16) and a control and evaluation unit (22) for communicating with an RFID transponder (14) via the RF transceiver (22) and the antenna (16) by means of an RFID signal and for a detection and localization of changes in the compartment occupancy, the RFID apparatus (18) further comprising a plurality of reference transponders (24) to be arranged on the shelf (10) at known positions, wherein the control and evaluation unit (22) is configured to localize, upon a change of a detectable RFID transponder population, an RFID transponder (14) which is removed or added based on the position of a reference transponder (24) where communication characteristics of the RFID communication have changed together with the change of the detectable RFID transponder population,
**characterized in that** the reference transponders (24) are movably arranged on the shelf (10) and change their position when an object (12) is added or removed, or movable shielding elements (28) are arranged with the reference transponders (24) which change their position relative to a respective reference transponder (24) by adding or removing an object (12).

2. The RFID apparatus (18) according to claim 1,
wherein the communication characteristics comprise a level and/or a phase of the RFID signal.

3. The RFID apparatus (18) according to claim 1 or 2,
wherein the control and evaluation unit (22) is configured for a teach-in of the reference transponders (24) and their positions.

4. The RFID apparatus (18) according to any of the preceding claims,
wherein the control and evaluation unit (22) is configured to store communication characteristics of the reference transponders (24) as a reference for changes.

5. The RFID apparatus (18) according to any of the preceding claims,
wherein the control and evaluation unit (22) is configured to maintain a list of the detectable RFID transponder population.

6. The RFID apparatus (18) according to any of the preceding claims,
wherein the control and evaluation unit (22) is configured to localize the RFID transponder (14) which was removed or added based on the position of the reference transponder (24) whose communication characteristics have changed most.

7. The RFID apparatus (18) according to any of the preceding claims,
wherein the reference transponders (24) are arranged at known, in particular regular intervals along a shelf plane.

8. The RFID apparatus (18) according to any of the preceding claims,
wherein a respective reference transponder (24) is arranged for each shelf compartment.

9. The RFID apparatus (18) according to any of the preceding claims,
wherein reference transponders (24) are arranged above the shelf compartments.

10. The RFID apparatus (18) according to any of the preceding claims,
wherein reference transponders (24) are arranged at a bottom of the shelf compartments.

11. The RFID apparatus (18) according to any of the preceding claims,
wherein the antenna (16) is an elongated antenna extending over the shelf width or shelf height and/or is arranged parallel to shelf elements or is used as a shelf element.

12. The RFID apparatus (18) according to any of the preceding claims, comprising at least one display element to be arranged at the shelf (10).

13. A method for compartment occupancy detection in a shelf (10), wherein there is an RFID communication with RIFD transponders (14) in the shelf (10) via at least one antenna (16) by means of RFID signals, and a change of compartment occupancy is detected and localized, wherein a plurality of reference transponders (24) is arranged on the shelf (10) at known positions and upon a change of a detectable RFID transponder population an RFID transponder (14) which is removed or added is localized based on the position of a reference transponder (24) where communication characteristics of the RFID communication have changed together with the change of the detectable RFID transponder population,
**characterized in that** the reference transponders (24) are movably arranged on the shelf (10) and change their position when an object (12) is added or removed, or movable shielding elements (28) are arranged with the reference transponders (24) which change their position relative to a respective reference transponder (24) by adding or removing an object (12).

## Revendications

1. Dispositif RFID (18) pour la reconnaissance d'occupation de casiers dans une étagère (10), comportant au moins une antenne (16), un émetteur-récepteur RF (20) connecté à l'antenne (16), et une unité de commande et d'évaluation (22) pour la communication avec un transpondeur RFID (14) via l'émetteur-récepteur RF (22) et via l'antenne (16) au moyen d'un signal RFID et pour la reconnaissance et l'association locale de modifications de l'occupation de casiers, dans lequel le dispositif RFID (18) comprend une multitude de transpondeurs de référence (24) à monter dans une position connue sur l'étagère (10), et l'unité de commande et d'évaluation (22) est réalisée pour localiser, lors d'une modification de la population détectable de transpondeurs RFID, le transpondeur RFID prélevée ou rajoutée (14) en se basant sur la position d'un transpondeur de référence (24), dans lequel des propriétés de la communication de la communication RFID se sont modifiées avec la modification de la population détectables de transpondeurs RFID, **caractérisé en ce que** les transpondeurs de référence (24) sont agencés de façon mobile sur l'étagère (10) et leur position se modifie par insertion ou par prélèvement d'un objet (12), ou des éléments de blindage mobiles (28) sont agencés au niveau des transpondeurs de référence (24), qui modifient leur position par rapport au transpondeur de référence respectif (24) par insertion ou par prélèvement d'un objet (12).

2. Dispositif RFID (18) selon la revendication 1,
dans lequel les propriétés de communication présentent un niveau et/ou une phase du signal RFID.

3. Dispositif RFID (18) selon la revendication 1 ou 2,
dans lequel l'unité de commande et d'évaluation (22) est réalisée pour apprendre les transpondeurs de référence (24) et leurs position.

4. Dispositif RFID (18) selon l'une des revendications précédentes,
dans lequel l'unité de commande et d'évaluation (22) est réalisée pour mémoriser les propriétés de communication des transpondeurs de référence (24) en tant que référence pour des modifications.

5. Dispositif RFID (18) selon l'une des revendications précédentes,
dans lequel l'unité de commande et d'évaluation (22) est réalisée pour gérer une liste de la population détectable de transpondeurs RFID.

6. Dispositif RFID (18) selon l'une des revendications précédentes,
dans lequel l'unité de commande et d'évaluation (22) est réalisée pour localiser le transpondeur RFID prélevé ou rajouté (14) en se basant sur la position de ce transpondeur de référence (24) dont les propriétés de communication se sont modifiées le plus.

7. Dispositif RFID (18) selon l'une des revendications précédentes,
dans lequel les transpondeurs de référence (24) sont montés à des distances connues, en particulier régulières, le long d'un plan de l'étagère.

8. Dispositif RFID (18) selon l'une des revendications précédentes,
dans lequel un transpondeur de référence respectif (24) est monté par casier de l'étagère.

9. Dispositif RFID (18) selon l'une des revendications précédentes,
dans lequel des transpondeurs de référence (24) sont agencés au-dessus des casiers de l'étagère.

10. Dispositif RFID (18) selon l'une des revendications précédentes,
dans lequel des transpondeurs de référence (24) sont agencés en bas au fond de l'étagère.

11. Dispositif RFID (18) selon l'une des revendications précédentes,
dans lequel l'antenne (16) est une antenne allongée sur la largeur de l'étagère ou sur la hauteur de l'étagère et/ou est agencée parallèlement aux éléments d'étagère ou est utilisée en tant qu'élément d'étagère.

12. Dispositif RFID (18) selon l'une des revendications précédentes,
qui comprend au moins un élément d'affichage à monter sur l'étagère (10).

13. Procédé de reconnaissance d'occupation de casiers dans une étagère (10), dans lequel une communication s'effectue avec des transpondeurs RFID (14) dans l'étagère (10) par au moins une antenne (16) au moyen de signaux RFID, et une modification de l'occupation de casiers est reconnue et associée localement, une multitude de transporteurs de référence (24) sont montés dans des positions connues sur l'étagère (10), et lors d'une modification de la population détectable de transpondeurs RFID, le transpondeur RFID prélevé ou rajouté (14) est localisé en se basant sur la position d'un transpondeur de référence (24), dans lequel des propriétés de la communication de la de la communication RFID se sont modifiées avec la modification de la population détectable de transpondeurs RFID, **caractérisé en ce que** les transpondeurs de référence (24) sont agencés de façon mobile sur l'étagère (10) et leur position se modifie par insertion ou par prélèvement d'un objet (12), ou des éléments de blindage mobiles (28) sont agencés au niveau des transpondeurs de référence (24), qui modifient leur position par rapport au transpondeur de référence respectif (24) par insertion ou par prélèvement d'un objet (12).
